# EUROPEAN PATENT SPECIFICATION

(11) **EP 0 814 412 B1**
(45) Date of publication and mention of the grant of the patent: **12.03.2003**
(21) Application number: 96109840.7
(22) Date of filing: 19.06.1996
(51) Int. Cl.: G06F 15/78

(54) **A digital signal processor and a method for interfacing a digital signal processor**
Digitaler Signalprozessor und Verfahren zur Schnittstellenbildung eines digitalen Signalprozessors
Processeur de signal numérique et méthode pour interfacer un processeur de signal numérique

(43) Date of publication of application: 29.12.1997
(73) Proprietor: MOTOROLA, INC., Schaumburg, IL 60196 (US)
(72) Inventor: Itkin, Yuval, Zoran 42823 (IL); Kowal, Shai, Ramat Gan 52297 (IL); Rozenshein, Zvi, Kfar Saba 44207 (IL)
(74) Representative: Gibson, Sarah Jane

(56) References cited:
- EP-A- 0 243 085
- EP-A- 0 546 354
- WO-A-93/04429
- US-A- 5 345 564
- US-A- 5 448 744
- MACHINE DESIGN, vol. 62, no. 12, 7 June 1990, pages 73-80, XP000135998 YOGENDRA JAIN: "TAPPING THE POWER OF DSPS"

## Description

### Background of the Invention

The invention relates in general to the interface of a digital signal processor and an external device. Typically one or more digital signal processors are connected to one host processor through a multiplexed address and data bus. From the prior art electronic systems are known which comprise a host processor and one or more digital signal processors which are the "slaves" of the host processor. Due to the multiplexing of the address and data on the host processor's bus, there has to be some glue logic to provide the required signals for the interface. To establish a connection between the host processor and one of its slave signal processors, an address value is outputted by the host processor onto the bus. Subsequently the same bus is available for data transmissions. Due to this sequence of address and data transmissions the address value has to be latched and decoded to generate a chip select signal in the external glue logic which provides the interface functionality. Only after the chip select signal for one of the slave signal processors is valid data can be transferred on the bus.

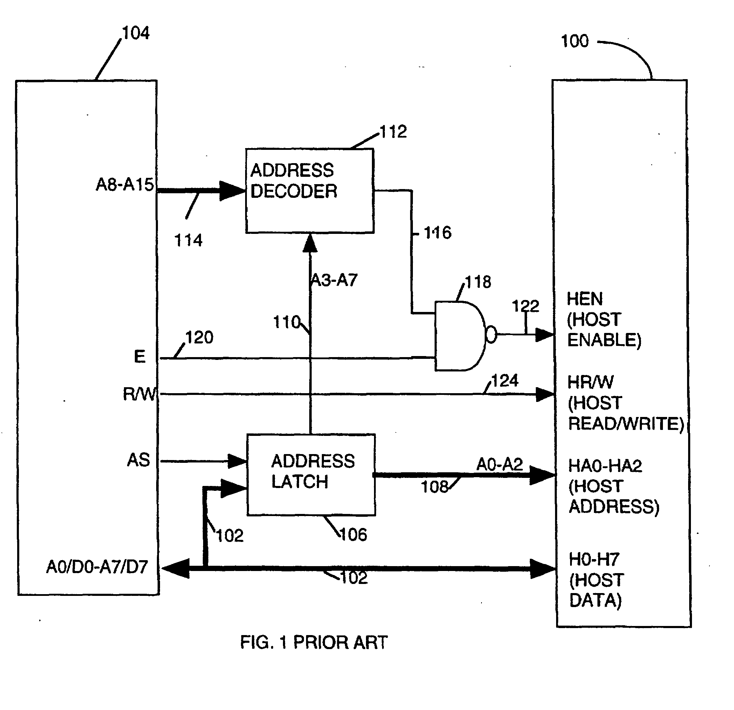

FIG. 1 shows such a prior art system. The digital signal processor 100 is a DSP 56002 which is commercially available from Motorola, Inc. The signal processor 100 is a general purpose digital signal processor which is composed of an efficient 24-bit digital signal processor core, program and data memories, various peripherals, and support circuitry. The core of the signal processor 100 is fed by on-chip program read only memory. The signal processor 100 contains a serial communication interface and a synchronous serial interface. To interface an external device, such as the host processor, a number of signal inputs and outputs are provided by the signal processor 100. These signals are described in more detail in the following: the signal input/outputs H0-H7 serve for connecting the signal processor 100 to the bidirectional bus 102. According to the signals applied at the inputs HR/W and HEN, H0-H7 act as an input or an output for data transfers from or to the external device 104, which is a host processor. The input HR/W selects the direction of data transfer for each access of the host processor 104. If host read/write HR/W is high and the signal HEN is asserted, H0-H7 are outputs and data from the signal processor 100 is transferred to the host processor 104. If HR/W is low and HEN is asserted, H0-H7 are inputs and host data is transferred to the signal processor 100. HR/W is stable when HEN is asserted.

The host enable signal input HEN enables a data transfer on the bidirectional host data bus 102. When HEN is asserted and HR/W is high, H0-H7 become outputs and the host processor may read data from the signal processor 100. When HEN is asserted and HR/W is low, H0-H7 become inputs. When HEN is deasserted, host data is latched inside the signal processor 100. The chip select signal derived from host address decoding and an enable clock are used to generate HEN. More details of the signal processor 100 are shown in the "DSP 56002 digital signal processor users manual", Motorola, Inc., 1993.

The host processor of the prior art electronic system is a Motorola MC68HC11. The host processor 104 has an address and data input/output A0/D0-A7/D7 which is connected to the bidirectional bus 102. The host processor 104 can output address bits A0-A7 on the bus 102 or can read or write data bits D0-D7 via the bus 102 from or to the signal processor 100.

When the host processor 104 outputs address bits A0-A7 on the bus 102 the signal address strobe AS is asserted to latch the address bits A0-A7 in the address latch 106. The address latch 106 is connected via the bus 108 with the inputs HA0-HA2 of the signal processor 100. The inputs HA0-HA2 provide the address selection for a host interface data register of the signal processor 100. The signal processor 100 has three host interface data registers for input and three host interface data registers for output operations. The address bits A0-A2 are transmitted via the bus 108 to the inputs HA0-HA2 to select one of the host interface data registers. The address latch 106 is coupled by the bus 110 to address decoder 112. The address bits A3-A7 are transmitted via the bus 110 to address decoder 112. Further, the address decoder 112 is coupled via bus 114 to the outputs A8-A15 of the host processor 104. The host processor 104 outputs via the bus 114 the further address bits A8-A15 to the address decoder 112. If the address information of the address bits A3-A15 corresponds to the signal processor 100 the address decoder 112 issues a chip select signal on line 116. The line 116 couples the address decoder 112 to one of the inputs of NAND gate 118. The other input of the gate 118 is connected via line 120 to the enable clock output E of the host processor 104. The output of the gate 118 is transmitted via line 122 to the host enable input HEN of the signal processor 100. The input host read/write HR/W of the signal processor 100 is controlled via the line 124 by the output R/W of the host processor 104.

Accordingly, in order to transfer data the host processor outputs the address bits A0-A15 for the selection of the signal processor 100 and a host interface data register within the signal processor 100. After the decoding of the address bits by the address decoder 112 and the output of a clock signal by the enable clock output E the host enable signal HEN is present on the line 122. Subsequently the bidirectional bus 102 is available for data transfers from or to the signal processor 100. To indicate whether the access request of the host processor 104 is due to a read or a write operation a corresponding signal is issued via the line 124 to the host read/write input HR/W of the signal processor 100.

This prior art electronic system is disadvantageous in that glue logic, i.e. address latch 106, address decoder 112 and gate 118 are required to provide the functionality of a host interface between the signal processor 100 and the host processor 104.

US Patent US-A-5 345 564 (Zilog) describes a technique whereby a CPU and peripheral circuitry, including at least one associated communication link (bus), is enabled. This enables the major part of the peripheral to remain in an inactive state until activated by the CPU upon establishment of a communication link.

US Patent US-A-5 448 744 (Motorola) describes an integrated circuit microprocessor having individually programmable chip select outputs. A priority level is assigned to an interrupt signal and this enables a chip to reemerge from reset by generating an active chip select signal.

It is therefore an object of the present invention to provide an improved digital signal processor in an electronic system and an improved method for interfacing an electronic device and at least one digital signal processor.

### Summary of the Invention

This and additional objects are accomplished basically by applying the features laid down in the independent claims. The invention is advantageous in that it allows the use of a host processor and a slave signal processor to communicate between them through a multiplexed address and data bus without the need for external chip select devices - so called glue logic. As a consequence many signal processors of the same type can be connected to the host processor using the same pins of the host processor without any need to generate external signals to select and distinguish between the signal processors.

The generation of a chip select signal internal each slave signal processor allows each of the slave signal processors to respond to access requests from the host processor by decoding internally the address of the host address bus and generating an internal "chip select" from internal logic.

In addition to the elimination of an external chip select generator no chip select pin is needed.

Since the need for external logic is reduced, also the current consumption of an electronic system according to the invention is reduced. Furthermore, the invention as claimed is advantageous in that it enables easy and flexible connection of multiple signal processors at the same time to a single host bus, with the flexibility to change the base address configuration of each of these signal processors "on the fly" simply by changing the content of the base address register. This feature can be very useful for multi-tasking host programs which should use the same address for more than one slave signal processor.

A common base address of the slave signal processors can be used to increase the throughput of the bus between the host processor and the slave signal processors when information is sent from the host to all of the slave signal processors. After the processing of the inputted data is done in each of the slave signal processors, the host processor typically wants to access the processed data and issues read requests to individual slave processors. Hence, after the processing is done, each signal processor is assigned with a unique base address to distinguish it from the other signal processors connected to the same host processor. As a consequence the host processor can address each individual signal processor selectively to read out the processed data.

Additional objects, features and advantages of the various aspects of the present invention will become apparent from the following description of its preferred embodiments, which description should be taken in conjunction with the accompanying drawings.

### Brief Description of the Drawing

FIG.1 is a block diagram illustrating a prior art host interface configuration comprising glue logic between a slave signal processor and a host processor;
FIG. 2 is a block diagram of an electronic system of the invention without glue logic between the host processor and the slave signal processor;
FIG. 3 is a schematic block diagram of the host interface data registers and their associated circuitry;
FIG. 4 is a flow chart of the method for interfacing the signal processor and the host processor; and
Fig. 5 is an overview diagram of a second embodiment of the invention comprising a plurality of slave signal processors.

### Detailed Description of the Preferred Embodiment

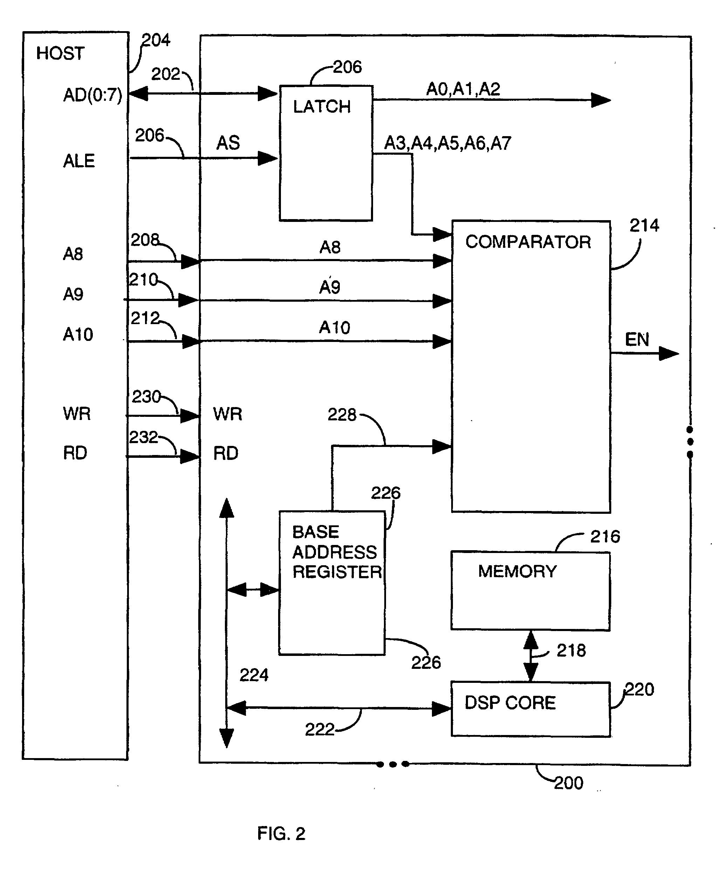

Referring to FIG.2, an electronic system is shown having a digital signal processor 200 and a host processor 204 which are interconnected via a bidirectional bus 202 for the transmission of address data and other kind of data. In the preferred embodiment considered here, the host processor 204 can be a 80C51 from Philips, whereas the signal processor 200 can be based on a DSP 56002 from Motorola having added the features of the invention as illustrated in FIG. 2.

The signal processor 200 comprises a latch 206 which serves as a means for latching an address of an access request of the external device, i.e. host processor 204. Correspondingly, the input of the latch 206 is connected to the bus 202. If the address bits A0-A7 are outputted by the host processor 204 via the bus 202, the signal output ALE of the host processor 204 is asserted and the corresponding signal is transmitted via the line 206 to a control input of the latch 206. This is the address strobe AS signal for latching the address bits A0-A7 which are present on the bus 202 of latch 206.

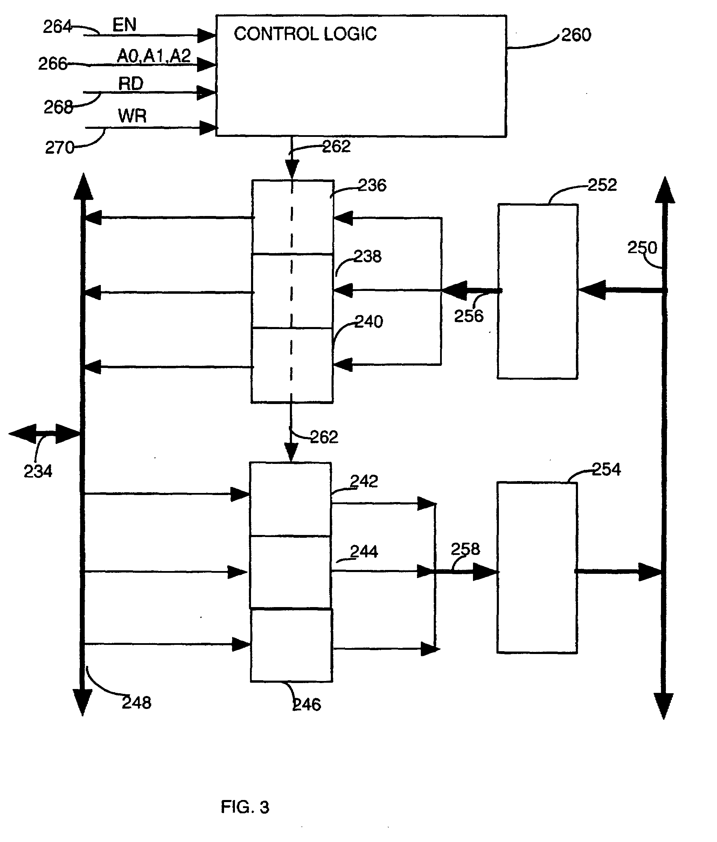

Concurrently with the outputting of the address bits A0-A7 on the bus 202 the further address bits A8-A10 are outputted by the host processor 204 via the lines 208, 210, 212 to the signal processor 200. The address bits A0, A1 and A2 constitute a first set of address bits to address the host interface data registers which are not shown in FIG. 2. The host interface data registers serve as registers means for buffering of a data transfer between the host processor 204 and the signal processor 200. The functionality of the host interface data registers is explained in more detail with reference to FIG. 3.

Still with reference to FIG. 2, the address bits A3-A10 constitute a second set of address bits which serve to address and select the signal processor 200. This second set of address bits is inputted to the comparator 214 which is connected to the latch 206 and to the lines 208, 210 and 212.

Further, the signal processor 200 comprises a program memory 216 which is coupled via bidirectional bus 218 to DSP core 220. The DSP core 220 is coupled via a bidirectional bus 222 to bidirectional peripheral bus 224. The peripheral bus 224 serves as a communication device between peripheral devices of the signal processor 200 and its core 220.

Further, the signal processor 200 has a base address register 226 which is coupled to the peripheral bus 224. The base address register serves as a means for storing identifying data of the signal processor 200. The information which is stored in the base address register 226 defines the base address of the address space of the data which are processed in the signal processor 200. Via the connection of the base address register 226 to the core 220 through the peripheral bus 224 and bidirectional bus 222 the base address which is stored in the base address register 226 can be changed by a write operation of the core 220. The base address which is stored in the base address register 226 is inputted into the comparator 214 via bus 228.

The comparator 214 compares the second set of address bits A3-A7 together with the address bits A8-A10 with the base address which is transmitted via the bus 228. In the preferred embodiment considered here, the base address is 8 bits wide so that it is compared to the corresponding 8 bits A3-A10 of the access request of the host processor 204. If the base address has a smaller number of bit positions - for example only five - then the address bits A8-A10 are not required for the comparison in comparator 214 and are thus programmed as "don't care" bits. Likewise, when the base address is wider than 8 bit positions additional address bits need to be inputted to the comparator such as address bits A11, A12, A13, A14 and A15 which are not shown in the drawing.

If there is a match between the base address and the address bits A3-A10 the comparator issues an enable signal EN for the signal processor 200. The enable signal EN is the chip select signal for the signal processor 200.

Concurrently with the outputting of the address bits by the host processor 204, the host processor issues a write or a read signal on its outputs WR or RD via the lines 230 or 232, respectively. If the host processor 204 raises its signal output WR, this signal is transmitted via the line 230 to the signal processor 200 and is interpreted in the signal processor 200 as an access request of the host processor 204 to carry out a write operation. With other words the access request of the host processor 204 is due to the inputting of data from the host processor 204 to the signal processor 200. Hence, subsequent to the transmission of the address data via the bidirectional bus 202 and the lines 208, 210 and 212, the data to be transferred to the signal processor 200 are outputted by the host processor 204 via the bus 202. As opposed to this, when a signal is outputted at the output RD of the host processor 204 and transmitted via the lines 232 to the signal processor 200, this is interpreted in the signal processor 200 as an access request of the host processor 204 due to a read operation. As a consequence after the transmittal of the address information and the selection of the signal processor 200, data is outputted by the signal processor 200 via the bus 202 to the host processor 204.

In the preferred embodiment shown in FIG. 2 only one digital signal processor 200 is connected to the host processor 204. However it is possible to connect other signal processors in the same way as signal processor 200 to the host processor 204 without a need of additional electronic components for the interconnections.

The host interface data registers 236 to 246 shown in FIG. 3 are coupled via the bus 248 to the data bus 234. The data bus 234 is coupled to the bus 202 which is shown in FIG. 2. As a consequence data which are transmitted from or to the host interface data registers 236 to 246 is transmitted via the data bus 234. The host interface data registers 236, 238 and 240 serve as register means for buffering of a data transfer from the signal processor 200 to the host processor 204 in case of an access request of the host processor 204 due to a read operation of data from the signal processor 200. Likewise, the host interface data registers 242, 244 and 246 serve as register means for buffering of a data transfer due to a write operation of the host processor 204 to the signal processor 200. The host interface data registers 236, 238 and 240 are coupled via a bus 256 to a data buffer 252 whereas the host interface data registers 242, 244 and 246 are coupled via a bus 258 to a data buffer 254. The data buffers 252 and 254 are coupled to an internal data bus 250 of the signal processor 200. The data buffers 252 and 254 serve to buffer the asynchronous input and output operations, respectively between the host processor 204 and the signal processor 200 which both have different system clocks.

The selection and enabling of the host interface data registers is accomplished by the control logic 260 which is coupled via the control line 262 to each of the host interface data registers 236-246. The control logic 260 is connected to the signal lines 264, 266,268 and 270. The control logic 260 receives the enable signal EN via the signal line 264, the address bits A0, A1, A2 via the signal line 266, the read signal RD via the signal line 268 and the write signal WR via the signal line 270. The signal line 266 can comprise three separate signal lines for the transmittal of the address bits A0, A1 and A2 in parallel.

If an enable signal EN is applied to the control logic 260, this signals to the control logic 260 that the signal processor 200 has been selected by the host processor 204 for input or output of data. If the signal RD is asserted at the same time, the control logic selects the set of host interface data registers 236, 238 and 240, whereas when the signal WR is asserted the control logic 260 selects the second set of host interface data registers 242, 244 and 246. Within the selected set of host interface data registers, one of the host interface data registers is selected according to the address bits A0, A1 and A2 which are received by the control logic 260 via the line 266.

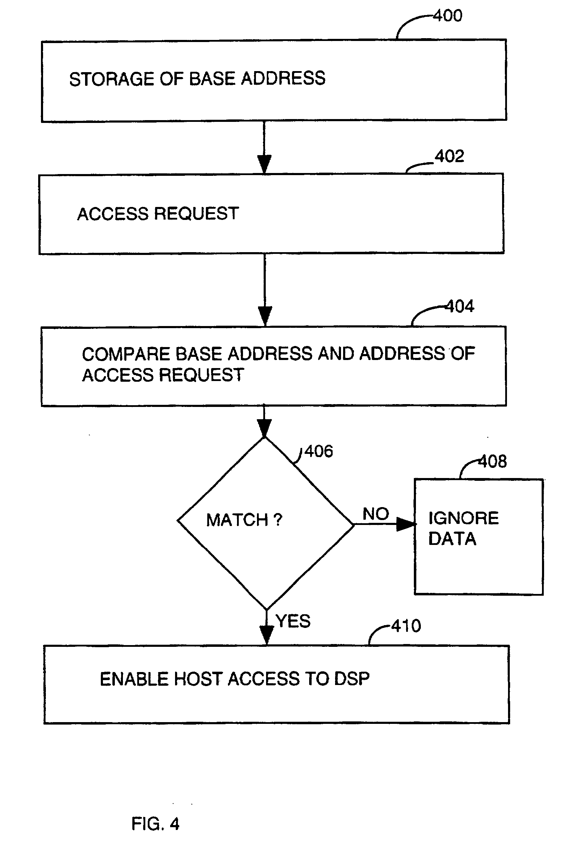

With reference to FIG. 4 the method for interfacing of the host processor 204 and the signal processor 200 is described in more detail. In step 400 identifying data of the signal processor 200 is stored in the base address register 226. The base address determines the identity of the signal processor 200 or with other words determines the address space of data for which the signal processor 200 is responsible.

In step 402 the host processor 204 issues an access request for accessing one of the host interface data registers 236 -246. In the following it is assumed that this access request is due to a write operation of the host processor 204 of data to the signal processor 200.

In step 402 the host processor 204 outputs the address bits A0-A10. The address bits A0 - A7 are latched in the latch 206 in response to the address strobe AS signal. The access request due to a write operation is signaled to the signal processor 200 by outputting the write signal WR via the line 230 to the signal processor 200. Accordingly one of the host interface data registers 242, 244 or 246 is selected to write data thereto.

In step 404 the base address which is stored in the base address register 226 and outputted to the comparator 214 via the bus 228 is compared to the address bits A3-A10 of the access request. If the base address and the second set of address bits A3-A7 as well as bits A8-A10 match it is decided in step 406 to go to step 410. In step 410 the enable signal EN is issued so that input or output operations to host interface data registers are made possible.

If there is a mismatch, it is decided in step 406 to go to step 408. In step 408 any data which is transmitted on the bidirectional bus 202 is ignored and no input or output operations to or from the host interface data registers are enabled.

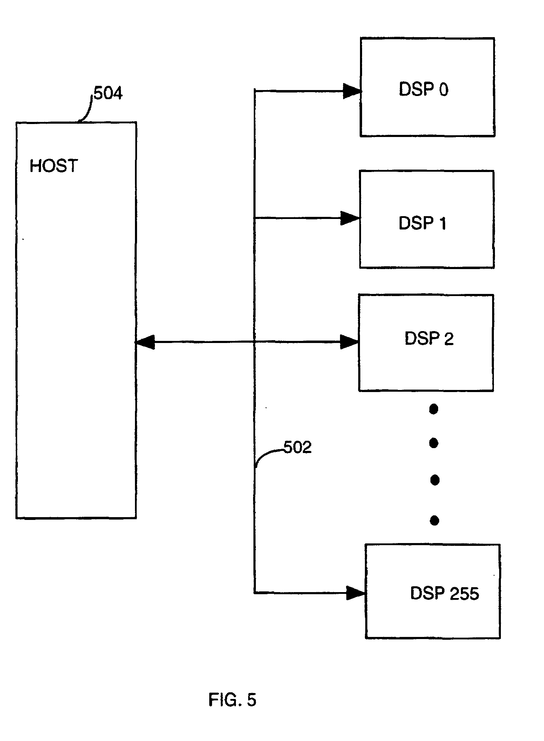

FIG. 5 shows an overview block diagram of a second preferred embodiment of the electronic system according to the invention. The electronic system comprises a host processor 504 and a number of 255 digital signal processors DSPO-DSP255. Each of the DSP's shown in FIG. 5 is of the type of the signal processor 200 shown in FIG. 2. The DSP's 0-255 are connected to the host processor 504 by the bus 502. The bus 502 corresponds to the bidirectional bus 202 in FIG. 2. The other address and control lines shown in FIG. 2 are not shown in FIG. 5 for simplicity.

The base address of each of the DSP's shown in FIG. 5 is determined by the core 220 of each individual DSP. Each DSP core 220 of each of the DSP's 0-255 writes a base address into the corresponding base address register 226 of its DSP. Thereby each DSP can have a different base address which is determined independently from the other DSP's. If the host processor 504 wants to write the same data to all of the DSP's in one access operation, this can be done by storing the same base addresses in all base address registers 226 of the DSP 0-255. To accomplish this, each of the cores 220 has to determine and store the same base address in its base address register.

If the host processor 504 makes an access request to the DSP's and outputs the corresponding control and address signals as explained with reference to FIG. 2, this results in the enabling signal EN in all of the digital signal processors. As a consequence the data which is outputted by the host processor 504 is inputted into a specific host interface data register such as register 242 in each of the DSP's. Subsequent to this input operation or a plurality of such input operations the digital signal processors will process the inputted data separately from each other according to different programs stored in the memories 216 of each signal processor.
When the processing of the inputted data is finished the host processor 504 wants to read the results from the DSP's. Therefore each individual DSP has to be accessed separately from the other DSP's since each DSP performed a different processing of the data and therefore can have different output data. Therefore each core 220 in the DSP's has to determine an individual base address and store such a base address in the corresponding base address register 226. If the address space of the data is divided into pages, it is advantageous to assign one page to each DSP where the base address identifies the beginning of the address space belonging to one page. If the host processor 504 outputs address bits on the bus 502 only one of the DSP's can have a match since each DSP has another base address. This allows the host processor 504 to selectively read out data from the individual DSP's. Since it is possible to change the base address which determines the address space of each DSP, it is possible to multiplex each DSP with different address spaces.

Although the various aspects of the present invention have been described with respect to a preferred embodiment, it will be understood that the invention is entitled to full protection within the full scope of the appended claims.

## Claims

1. A digital signal processor (200) comprising
a) register means (236-246) for buffering of a data transfer between said signal processor and an external device (204);
b) means (206) for latching an address of an access request of said external device to said signal processor, said address comprising a first set of address bits to address said register means and a second set of address bits to address said signal processor;
c) means (226) for storing identifying data of said signal processor;
d) means (214) for comparing said identifying data and said second set of address bits to select said signal processor, if said identifying data and said second set of address bits match; and
(e) coupling means (222,224) for coupling said means for storing to internal processing means (220) of said signal processor (200) to replace said identifying data by second identifying data on request of said internal processing means.

2. The signal processor of claim 1 wherein the means for coupling is a peripheral data bus of said internal processing means.

3. An electronic system comprising
a) host processor means (204);
b) at least one signal processor (200), said signal processor comprising;
register means (236-246) for buffering of data transfer between said signal processor and said host processor means, means (206) for latching an address of an access request of said host processor means to said signal processor, said address comprising a first set of address bits to address said register means and a second set of address bits to address said signal processor;
means (226) for storing identifying data of said signal processor,
means (214) for comparing said identifying data and said second set of address bits to select said signal processor if said identifying data and said second set of address bits match, and
means (222,224) for coupling said means for storing to internal processing means (220) of said signal processor to replace said identifying data by second identifying data on request of said internal processing means.

4. The electronic system of claim 3 said means for coupling being a peripheral data bus of said internal processing means.

5. A method for interfacing an electronic device (204) and at least one signal processor (200), said method comprising the steps of
storing (400) identifying data of said signal processor in said signal processor;
issuing (402) an access request by said electronic device for accessing register means (236-246) of said signal processor, said access request comprising a first set of address bits to address said register means and a second set of address bits to address said signal processor;
comparing (404) said identifying data and said second set of address bits to select said signal processor if said identifying data and said second set of address bits match;
replacing said identifying data of said signal processor with second identifying data to multiplex said signal processors with different address spaces.

6. The method of claim 5 further comprising the step of storing said second identifying data of said signal processor in said signal processor to replace said identifying data subsequent to an access operation to said signal processor by said electronic device.

## Patentansprüche

1. Digitaler Signalprozessor (200), der folgendes umfasst:
a) Registereinrichtungen (236-246) zum Zwischenspeichern einer Datenübertragung zwischen dem Signalprozessor und einem externen Bauelement (204) ;
b) eine Einrichtung (206) zum Verriegeln ("latching") einer Adresse einer Zugriffsanforderung des externen Bauelements auf den Signalprozessor, wobei die Adresse einen ersten Satz von Adressbits zum Adressieren der Registereinrichtungen und einen zweiten Satz von Adressbits zum Adressieren des Signalprozessors umfasst;
c) eine Einrichtung (226) zum Speichern von Kenndaten des Signalprozessors;
d) eine Einrichtung (214) zum Vergleichen der Kenndaten und des zweiten Satzes von Adressbits, um den Signalprozessor auszuwählen, wenn die Kenndaten und der zweite Satz von Adressbits übereinstimmen; und
e) Verbindungseinrichtungen (222, 224) zum Verbinden der Speichereinrichtung mit einer internen Verarbeitungseinrichtung (220) des Signalprozessors (200), um die Kenndaten auf Anforderung der internen Verarbeitungseinrichtung durch zweite Kenndaten zu ersetzen.

2. Signalprozessor nach Anspruch 1, bei dem die Einrichtung zum Verbinden ein peripherer Datenbus der internen Verarbeitungseinrichtung ist.

3. Elektroniksystem, das folgendes umfasst:
a) Hostprozessormittel (204);
b) wenigstens einen Signalprozessor (200), wobei der Signalprozessor folgendes umfasst:
Registereinrichtungen (236-246) zum Zwischenspeichern einer Datenübertragung zwischen dem Signalprozessor und den Hostprozessormitteln, eine Einrichtung (206) zum Verriegeln einer Adresse einer Zugriffsanforderung der Hostprozessormittel auf den Signalprozessor, wobei die Adresse einen ersten Satz von Adressbits zum Adressieren der Registereinrichtungen und einen zweiten Satz von Adressbits zum Adressieren des Signalprozessors umfasst;
eine Einrichtung (226) zum Speichern von Kenndaten des Signalprozessors;
eine Einrichtung (214) zum Vergleichen der Kenndaten und des zweiten Satzes von Adressbits, um den Signalprozessor auszuwählen, wenn die Kenndaten und der zweite Satz von Adressbits übereinstimmen; und
eine Einrichtung (222, 224) zum Verbinden der Speichereinrichtung mit der internen Verarbeitungseinrichtung (220) des Signalprozessors, um die Kenndaten auf Anforderung der internen Verarbeitungseinrichtung durch zweite Kenndaten zu ersetzen.

4. Elektroniksystem nach Anspruch 3, wobei die Verbindungseinrichtung ein peripherer Datenbus der internen Verarbeitungseinrichtung ist.

5. Verfahren zum Ausbilden einer Schnittstelle zwischen einem elektronischen Bauelement (204) und wenigstens einem Signalprozessor (200), wobei das Verfahren die folgenden Schritte umfasst:
Speichern (400) von Kenndaten des Signalprozessors in dem Signalprozessor;
Ausgabe (402) einer Zugriffsanforderung durch das elektronische Bauelement, um auf Registereinrichtungen (236-246) des Signalprozessors zuzugreifen, wobei die Zugriffsanforderung einen ersten Satz von Adressbits zum Adressieren der Registereinrichtungen und einen zweiten Satz von Adressbits zum Adressieren des Signalprozessors umfasst;
Vergleichen (404) der Kenndaten und des zweiten Satzes von Adressbits, um den Signalprozessor auszuwählen, wenn die Kenndaten und der zweite Satz von Adressbits übereinstimmen;
Ersetzen der Kenndaten des Signalprozessors durch zweite Kenndaten, um die Signalprozessoren mit unterschiedlichen Adressräumen zu multiplexen.

6. Verfahren nach Anspruch 5, bei dem ferner die zweiten Kenndaten des Signalprozessors in dem Signalprozessor gespeichert werden, um die Kenndaten im Anschluss an einen Zugriff des elektronischen Bauelements auf den Signalprozessor zu ersetzen.

## Revendications

1. Processeur de traitement numérique du signal (200) comprenant :
a) des moyens formant registres (236 - 246) pour tamponner un transfert de données entre ledit processeur de traitement du signal et un dispositif externe (204) ;
b) des moyens (206) pour verrouiller une adresse d'une demande d'adresse dudit dispositif externe audit processeur de traitement du signal, ladite adresse comprenant un premier ensemble de bits d'adresse pour adresser lesdits moyens formant registres et un deuxième ensemble de bits d'adresse pour adresser ledit processeur de traitement du signal ;
c) des moyens (226) pour stocker des données d'identification dudit processeur de traitement du signal ;
d) des moyens (214) pour comparer lesdites données d'identification et ledit deuxième ensemble de bits d'adresse, pour sélectionner ledit processeur de traitement du signal si lesdites données d'identification et ledit deuxième ensemble de bits d'adresse correspondent ; et
(e) des moyens de couplage (222, 224) pour coupler lesdits moyens de stockage à des moyens de traitement internes (220) dudit processeur de traitement du signal (200), pour remplacer lesdites données d'identification par des deuxièmes données d'identification à la demande desdites moyens de traitement interne.

2. Processeur de traitement du signal selon la revendication 1, dans lequel les moyens de couplage sont un bus de données périphérique desdits moyens de traitement internes.

3. Système électronique, comprenant :
a) des moyens de traitement hôtes (204) ;
b) au moins un processeur de traitement du signal (200), ledit processeur de traitement du signal comprenant :
des moyens formant registres (236 - 246) pour tamponner un transfert de données entre ledit processeur de traitement du signal et lesdits moyens de traitement hôte ;
des moyens (206) pour verrouiller une adresse d'une demande d'adresse desdits moyens de traitement hôte audit processeur de traitement du signal, ladite adresse comprenant un premier ensemble de bits d'adresse pour adresser lesdits moyens formant registres et un deuxième ensemble de bits d'adresse pour adresser ledit processeur de traitement du signal ;
des moyens (226) pour stocker des données d'identification dudit processeur de traitement du signal ;
des moyens (214) pour comparer lesdites données d'identification et ledit deuxième ensemble de bits d'adresse, pour sélectionner ledit processeur de traitement du signal si lesdites données d'identification et ledit deuxième ensemble de bits d'adresse correspondent ; et
des moyens de couplage (222, 224) pour coupler lesdits moyens de stockage à des moyens de traitement internes (220) dudit processeur de traitement du signal, pour remplacer lesdites données d'identification par des deuxièmes données d'identification à la demande desdites moyens de traitement interne.

4. Système électronique selon la revendication 3, lesdits moyens de couplage étant un bus de données périphérique desdits moyens de traitement interne.

5. Procédé d'interfaçage d'un dispositif électronique (204) et d'au moins un processeur de traitement du signal (200), ledit procédé comprenant les étapes de :
stockage (400) des données d'identification dudit processeur de traitement du signal dans ledit processeur de traitement du signal ;
émission (402) d'une demande d'accès par ledit dispositif électronique pour accéder aux moyens formant registres (236 - 246) dudit processeur de traitement du signal, ladite demande d'accès comprenant un premier ensemble de bits d'adresse pour adresser lesdits moyens formant registres et un deuxième ensemble de bits d'adresse pour adresser ledit processeur de traitement du signal ;
comparaison (404) desdites données d'identification et dudit deuxième ensemble de bits d'adresse pour sélectionner ledit processeur de traitement du signal si lesdites données d'identification et ledit deuxième ensemble de bits d'adresse correspondent ; et
remplacement desdites données d'identification dudit processeur de traitement du signal par des deuxièmes données d'identification, pour multiplexer lesdits processeurs de traitement du signal ayant des espaces d'adressage différents.

6. Procédé selon la revendication 5, comprenant, en outre, l'étape qui consiste à stocker lesdites deuxièmes données d'identification dudit processeur de traitement du signal dans ledit processeur de traitement du signal, pour remplacer lesdites données d'identification après une opération d'accès audit processeur de traitement du signal par ledit dispositif électronique.
